# EUROPEAN PATENT APPLICATION

(11) **EP 4 841 784 A1**
(43) Date of publication of application: **18.11.2026**
(21) Application number: 25848808.9
(22) Date of filing: 22.07.2025
(51) Int. Cl.: H01M 50/383, H01M 50/342, H01M 10/6556, H01M 10/613, H01M 50/273, H01M 10/6551, H01M 10/6555, H01M 50/317, H01M 10/6557

(54) **BATTERY DEVICE**

(30) Priority: 30.07.2024 KR 20240101155
(71) Applicant: LG Energy Solution, Ltd., Seoul 07335 (KR)
(72) Inventor: KIM, Jin Hyuk, Daejeon 34122 (KR); CHOI, Jong Hwa, Daejeon 34122 (KR); LEE, Jae Hyun, Daejeon 34122 (KR)
(74) Representative: BCKIP Part mbB
(86) International application number: PCT/KR2025/010783
(87) International publication number: WO 2026/029465

(57) **Abstract**

The present disclosure provides a battery device including: a cell assembly with a plurality of battery cells; a top pad on the cell assembly; a housing including a base frame supporting the cell assembly and a top frame covering the top pad, wherein the base frame includes a plurality of venting holes; and a venting cover provided between the cell assembly and the base frame and configured to cover the plurality of venting holes of the base frame.

## Description

### [Technical Field]

The present disclosure relates to a battery device.

This application claims the benefit of priority based on Korean Patent Application No. 10-2024-0101155, filed on July 30, 2024, and the entire content of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present disclosure is directed to providing a battery device.

### [Technical Solution]

An aspect of the present disclosure provides a battery device including: a cell assembly with a plurality of battery cells; a top pad on the cell assembly; a housing including a base frame supporting the cell assembly and a top frame covering the top pad, wherein the base frame includes a plurality of venting holes; and a venting cover provided between the cell assembly and the base frame and configured to cover the plurality of venting holes of the base frame.

In embodiments, the battery device may further include a first adhesive layer provided between the base frame and the venting cover and configured to attach the venting cover to the base frame, and a second adhesive layer provided between the cell assembly and the venting cover and configured to attach the plurality of battery cells to the venting cover.

In embodiments, the first adhesive layer may include a plurality of holes overlapping the plurality of venting holes of the base frame, and the second adhesive layer may include a plurality of holes overlapping the plurality of venting holes of the base frame.

In embodiments, the venting cover may include a plurality of cutout patterns in regions overlapping the plurality of venting holes of the base frame.

In embodiments, the plurality of cutout patterns may include a plurality of line patterns that are in the form of a straight line.

In embodiments, the plurality of cutout patterns may include a plurality of round patterns having an arc shape.

In embodiments, the cell assembly may further include a plurality of inter-cell pads, and each of the plurality of inter-cell pads may be between two neighboring battery cells among the plurality of battery cells.

In embodiments, the top pad may include a cooling channel configured to allow a cooling fluid to flow therethrough.

In embodiments, the top pad may be attached to the plurality of battery cells and include a thermally conductive material.

In embodiments, the battery device may further include an adhesive layer provided between the top pad and the cell assembly, and configured to attach the plurality of battery cells to the top pad.

In embodiments, the cell assembly may further include a plurality of inter-cell pads, and the plurality of inter-cell pads may be between two neighboring battery cells among the plurality of battery cells and allow the plurality of battery cells to be thermally coupled to the top pad.

In embodiments, the base frame may further include a cooling channel configured to allow a cooling fluid to flow therethrough, and the cooling channel of the base frame may overlap the plurality of battery cells and be spaced apart from the plurality of venting holes of the base frame.

In embodiments, the plurality of venting holes of the base frame may overlap two or more battery cells among the plurality of battery cells.

In embodiments, the battery device may further include a plurality of venting devices on the base frame, and each of the plurality of venting devices is configured to block or allow the flow of a gas through a corresponding venting hole among the plurality of venting holes according to inner pressure of the corresponding venting hole.

In embodiments, the cell assembly may further include a plurality of inter-cell pads, each of the plurality of inter-cell pads may be provided between two neighboring battery cells among the plurality of battery cells and include a first cooling channel configured to allow a cooling fluid to flow therethrough, the top pad may be attached to the cell assembly via an adhesive layer and include a second cooling channel configured to allow the cooling fluid to flow therethrough, and the venting cover may include a heat-resistant material.

### [Advantageous Effects]

In a battery device according to embodiments, upper and side surfaces of each of battery cells are covered with a top pad and an inter-cell pad, and venting holes are provided in a bottom of a housing to discharge a gas, thus enabling downward venting to discharge a high-temperature gas and/or flames downward in a thermal event situation. In the thermal event situation, a high-temperature gas and/or flames generated in a battery cell can be quickly discharged downward, thereby preventing a series of ignitions of the battery cells due to the high-temperature gas and/or flames flowing in the battery device. Accordingly, the safety of the battery device may improve.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a cross-sectional view of a battery device according to embodiments.
FIG. 2 is a cross-sectional view of the battery device taken along line II-II' of FIG. 1.
FIGS. 3A to 3C are bottom views of a part of a battery device.
FIGS. 4A to 4G are bottom views of a part of a battery device.
FIG. 5 is a cross-sectional view of a part of the battery device taken along line V-V' of FIG. 1.
FIG. 6 is a cross-sectional view of a part of a battery device according to embodiments.
FIG. 7 is a cross-sectional view of a battery device according to embodiments.
FIG. 8 is a cross-sectional view of a battery device according to embodiments.
FIG. 9 is a cross-sectional view of an apparatus according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

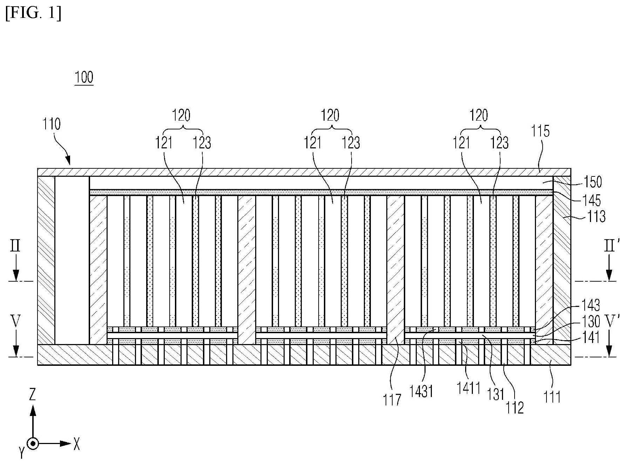

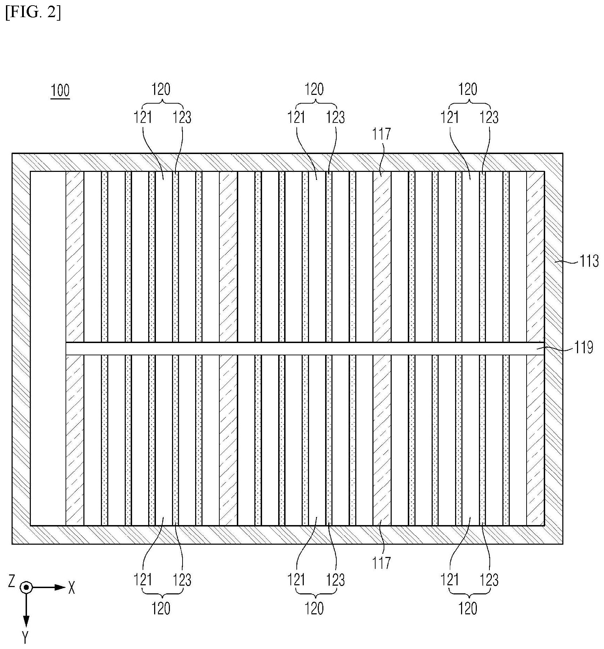

FIG. 1 is a cross-sectional view of a battery device 100 according to embodiments. FIG. 2 is a cross-sectional view of the battery device 100 taken along line II-II' of FIG. 1.

Referring to FIGS. 1 and 2, the battery device 100 may include a housing 110, a cell assembly 120, a venting cover 130, and a top pad 150. The battery device 100 may correspond to a battery pack or a battery module.

The housing 110 may provide an inner space for accommodating the cell assembly 120 therein. In embodiments, a plurality of cell assemblies 120 may be provided in the inner space of the housing 110. The housing 110 may include a base frame 111, a side frame 113, and a top frame 115.

The base frame 111 may support the plurality of cell assemblies 120. The base frame 111 may have a flat plate shape extending approximately in a first horizontal direction (e.g., an X-axis direction) and a second horizontal direction (e.g., a Y-axis direction). In embodiments, the plurality of cell assemblies 120 may be arranged on the base frame 111 in the first horizontal direction (e.g., the X-axis direction) and the second horizontal direction (e.g., the Y-axis direction).

The side frame 113 may be coupled to the base frame 111. The side frame 113 may extend along the perimeter of the base frame 111 and surround the cell assembly 120.

The top frame 115 may be fastened onto the side frame 113 to cover the plurality of cell assemblies 120. The top frame 115 may have a flat plate shape extending in the first horizontal direction (e.g., the X-axis direction) and the second horizontal direction (e.g., the Y-axis direction).

The housing 110 may include a plurality of first inner walls 117 and a second inner wall 119. The plurality of first inner walls 117 and the second inner wall 119 may be coupled to the base frame 111. The plurality of first inner walls 117 and the second inner wall 119 may divide the inner space of the housing 110 into a plurality of spaces, and one of the cell assemblies 120 may be accommodated in each of the plurality of spaces defined by the plurality of first inner walls 117 and the second inner wall 119. In embodiments, the plurality of first inner walls 117 may be spaced apart from each other in the first horizontal direction (e.g., the X-axis direction) and may each extend in the second horizontal direction (e.g., the Y-axis direction). One cell assembly 120 may be between a pair of first inner walls 117. The second inner wall 119 may extend in the first horizontal direction (e.g., the X-axis direction) and be between neighboring cell assemblies 120 in the second horizontal direction (e.g., the Y-axis direction).

The cell assembly 120 may include a plurality of battery cells 121 and a plurality of inter-cell pads 123.

Each of the battery cells 121 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

Each of the battery cells 121 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

The plurality of battery cells 121 of the cell assembly 120 may be connected in series and/or in parallel. For example, the plurality of battery cells 121 may be connected to each other in series. For example, the plurality of battery cells 121 may be connected to each other in parallel. For example, when a set of two or more battery cells 121 connected in parallel is defined as a bank, one bank composed of two or more battery cells 121 connected in parallel and another bank composed of two or more battery cells 121 connected in parallel may be connected in series.

In embodiments, the plurality of battery cells 121 of the cell assembly 120 may be arranged in the first horizontal direction (e.g., the X-axis direction) and may each extend in the second horizontal direction (e.g., the Y-axis direction). An electrode lead may be provided on at least one of opposite end portions of each of the battery cells 121 in the second horizontal direction (e.g., the Y-axis direction). The electrode leads of neighboring battery cells 121 among the plurality of battery cells 121 may be electrically and physically connected to each other.

Each of the plurality of inter-cell pads 123 may be between two neighboring battery cells 121 among the plurality of battery cells 121. Each of the inter-cell pads 123 may have a flat plate shape extending approximately in the second horizontal direction (e.g., the Y-axis direction) and a vertical direction (e.g., a Z-axis direction). The plurality of inter-cell pads 123 may be spaced apart from each other in the first horizontal direction (e.g., the X-axis direction), and at least one battery cell 121 may be between two adjacent inter-cell pads 123. Each of the inter-cell pads 123 may be attached to a battery cell 121 adjacent thereto via an adhesive member such as a tape or a resin. One side surface of each of the inter-cell pads 123 may be attached to a battery cell 121 opposite thereto, and another side surface of each of the inter-cell pads 123 may be attached to a battery cell 121 opposite thereto. Opposite side surfaces of each of the battery cells 121 may be covered with the inter-cell pads 123.

In embodiments, each of the inter-cell pads 123 may be configured to cool the battery cell 121. Each of the inter-cell pads 123 may include a material having high thermal conductivity to dissipate heat generated from the battery cell 121 or to transfer the heat to the outside. Each of the inter-cell pads 123 may include a material having high thermal conductivity, e.g., aluminum, copper, gold, silver, tungsten, iron, or a combination thereof.

In embodiments, each of the inter-cell pads 123 may include a cooling channel configured to allow a cooling fluid to flow therethrough. A cooling fluid from the outside may be supplied to an inlet of the cooling channel of each of the inter-cell pads 123, flow along the cooling channel of each of the inter-cell pads 123, and be discharged to the outside through an outlet of the cooling channel of each of the inter-cell pads 123. While the cooling fluid flows along the cooling channel of each of the inter-cell pads 123, the battery cells 121 may be cooled. The cooling fluid may include a coolant and/or a refrigerant.

In embodiments, each of the inter-cell pads 123 may be provided between two neighboring battery cells 121 to prevent thermal transition between the two neighboring battery cells 121. In addition, each of the inter-cell pad 123 may be brought into close contact with a side of the battery cell 121 to support the battery cell 121. Each of the inter-cell pads 123 may support the battery cell 121 to suppress deformation of the battery cell 121 due to swelling of the battery cell 121. In embodiments, the inter-cell pad 123 may be configured to be elastically deformed by an external force so as to support a battery cell 121 corresponding thereto. When an external force is applied to the inter-cell pad 123 in the first horizontal direction (e.g., the X-axis direction) , a thickness of the inter-cell pad 123 in the first horizontal direction (e.g., the X-axis direction) may decrease from an initial thickness thereof. When the external force is released from the inter-cell pad 123, the thickness of the inter-cell pad 123 in the first horizontal direction (e.g., the X-axis direction) may restore to the initial thickness. When a thickness of the battery cell 121 in the first horizontal direction (e.g., the X-axis direction) increases due to the swelling of the battery cell 121, the inter-cell pad 123 may be elastically deformed to absorb or disperse a force due to the swelling of the battery cell 121. In embodiments, the inter-cell pad 123 may include polyurethane, silicone, aerogel, or a combination thereof.

The base frame 111 may include a plurality of venting holes 112. The plurality of venting holes 112 may penetrate the base frame 111 in the vertical direction (e.g., the Z-axis direction). A high-temperature gas and/or flames generated in the housing 110 may be discharged to the outside of the battery device 100 through the plurality of venting holes 112 of the base frame 111. In embodiments, each of the plurality of venting holes 112 of the base frame 111 may overlap at least one battery cell 121 in the vertical direction (e.g., the Z-axis direction) and discharge a gas and/or flames generated from the at least one battery cell 121 to the outside. In embodiments, the plurality of battery cells 121 of each cell assembly 120 may overlap at least one of the plurality of venting holes 112 of the base frame 111 in the vertical direction (e.g., the Z-axis direction).

The venting cover 130 may be between the cell assembly 120 and the base frame 111. The venting cover 130 may be in the form of a sheet or film having a uniform thickness. The venting cover 130 may be attached to the base frame 111 to cover the plurality of venting holes 112 of the base frame 111. The venting cover 130 may cover the plurality of venting holes 112 of the base frame 111 to prevent external foreign substances from flowing into the housing 110 through the plurality of venting holes 112 of the base frame 111.

In embodiments, the venting cover 130 may include a heat-resistant material, a fire-resistant material, and/or a heat-resistant material. In embodiments, the venting cover 130 may include a fire resistance barrier (FRB) sheet, a non-combustible glass fiber (NCG) sheet, a silicone sheet and/or a polyurethane sheet. In embodiments, the venting cover 130 may include at least one of a highly heat-resistant resin, a glass fiber, fiber reinforced plastic, a compressed fiber, and a fiber fire-resistant insulator.

The venting cover 130 may include a plurality of venting parts 131 that are opened to allow the flow of a gas toward the plurality of venting holes 112 when a thermal event such as thermal runaway of the battery cell 121 occurs in the battery device 100. Each of the plurality of venting parts 131 of the venting cover 130 may overlap a corresponding venting hole 112 among the plurality of venting holes 112 of the base frame 111 in the vertical direction (e.g., the Z-axis direction). The plurality of venting parts 131 of the venting cover 130 may be parts with weaker physical strength than other parts of the venting cover 130. For example, each of the plurality of venting parts 131 of the venting cover 130 may include a cutout pattern of the venting cover 130. The cutout pattern may be a straight, curved, and/or arc-shaped groove of the venting cover 130. The cutout pattern may not penetrate the venting cover 130 or may penetrate the venting cover 130. For example, the cutout pattern may be formed by cutting the venting cover 130 by a cutting means such as a knife. When a thermal event occurs in the battery device 100, at least one of the plurality of venting parts 131 of the venting cover 130 may rupture, and a high-temperature gas may be discharged to the outside through the at least one ruptured venting part 131 of the venting cover 130 and the venting hole 112 of the base frame 111.

The venting cover 130 may be attached to the base frame 111 via a first adhesive layer 141 between the venting cover 130 and the base frame 111 and be attached to each of the plurality of battery cells 121 via a second adhesive layer 143 between the venting cover 130 and the cell assembly 120. In embodiments, the first adhesive layer 141 and the second adhesive layer 143 may each include a thermal resin and/or a thermal interface material. In embodiments, the first adhesive layer 141 and the second adhesive layer 143 may each include a double-sided tape. In embodiments, the first adhesive layer 141 may include a double-sided tape, and the second adhesive layer 143 may include a thermal resin.

In embodiments, the first adhesive layer 141 may include a plurality of holes 1411 overlapping the plurality of venting holes 112 of the base frame 111 in the vertical direction (e.g., the Z-axis direction). Each of the plurality of holes 1411 of the first adhesive layer 141 may overlap and communicate with a corresponding venting hole 112 among the plurality of venting holes 112 of the base frame 111 in the vertical direction (e.g., the Z-axis direction). The plurality of holes 1411 of the first adhesive layer 141 are provided to overlap the plurality of venting holes 112 of the base frame 111 in the vertical direction (e.g., the Z-axis direction) to prevent interference with the flow of a high-temperature gas due to the first adhesive layer 141 when a thermal event occurs in the battery device 100. For example, when a resin is applied onto the base frame 111 to form the first adhesive layer 141, the resin may be applied not to cover the plurality of venting holes 112 of the base frame 111. In this case, regions of the base frame 111 on which the resin is not applied may correspond to the plurality of holes 1411 of the first adhesive layer 141.

In embodiments, the second adhesive layer 143 may include a plurality of holes 1431 overlapping the plurality of venting holes 112 of the base frame 111 in the vertical direction (e.g., the Z-axis direction). Each of the plurality of holes 1431 of the second adhesive layer 143 may overlap and communicate with a corresponding venting hole 112 among the plurality of venting holes 112 of the base frame 111 in the vertical direction (e.g., the Z-axis direction). The plurality of holes 1431 of the second adhesive layer 143 are provided to overlap the plurality of venting holes 112 of the base frame 111 in the vertical direction (e.g., the Z-axis direction) to prevent interference with the flow of a high-temperature gas due to the second adhesive layer 143 when a thermal event occurs in the battery device 100. For example, when a resin is applied onto the venting cover 130 to form the second adhesive layer 143, the resin may be applied not to overlap the plurality of venting holes 112 of the base frame 111. In this case, regions of the base frame 111 on which the resin is not applied may correspond to the plurality of holes 1431 of the second adhesive layer 143.

The top pad 150 may be on the cell assembly 120. The top pad 150 may cover the cell assembly 120. In embodiments, the top pad 150 may be attached to the plurality of battery cells 121 via an adhesive layer 145. The adhesive layer 145 may include a thermal resin and/or a thermal interface material.

The top pad 150 may cover the plurality of battery cells 121 and be in close contact with the plurality of battery cells 121 to guide a high-temperature gas generated in the battery cells 121 to be vented downward. The top pad 150 may be brought into close contact with an upper surface of the battery cell 121 to prevent a gas flow space from being formed on an upper side of the battery cell 121. Because the top pad 150 is brought into close contact with the upper surface of the battery cell 121, a high-temperature gas generated in the battery cell 121 may flow toward the base frame 111 and be discharged to the outside of the battery device 100 through the plurality of through-holes of the base frame 111.

In embodiments, the top pad 150 may be thermally coupled to the plurality of battery cells 121 and be configured to cool the plurality of battery cells 121. The top pad 150 may include a material with high thermal conductivity to dissipate heat generated in the battery cell 121 or to transfer the heat to the outside. In embodiments, the top pad 150 may be a heat sink, a heat dissipation plate, or metal foam. The top pad 150 may include a material with high thermal conductivity, e.g., aluminum, copper, gold, silver, tungsten, iron, or a combination thereof.

In embodiments, the top pad 150 may include a cooling channel configured to allow a cooling fluid to flow therethrough. A cooling fluid from the outside may be supplied to an inlet of the cooling channel of the top pad 150, flow along the cooling channel of the top pad 150, and be discharged to the outside through an outlet of the cooling channel of the top pad 150. While the cooling fluid flows along the cooling channel of the top pad 150, the plurality of battery cells 121 may be cooled. The cooling fluid may include a coolant and/or a refrigerant.

In embodiments, the top pad 150 may include a heat-resistant material, a fire-resistant material and/or a heat-resistant material. In embodiments, the top pad 150 may include polyurethane, silicone, aerogel, or a combination thereof.

In the battery device 100 according to embodiments, the upper and side surfaces of each of the battery cells 121 are covered with the top pad 150 and the inter-cell pad 123 and the venting holes 112 are provided in the bottom of the housing 110 to discharge a gas, thereby implementing downward venting for discharging a high-temperature gas and/or flames downward in a thermal event situation. In the thermal event situation, a high-temperature gas and/or flames generated in the battery cell 121 can be quickly discharged downward, thereby preventing a series of ignitions of the battery cells 121 due to the high-temperature gas and/or flames flowing in the battery device 100. Accordingly, the safety of the battery device 100 may improve.

### (Second Embodiment)

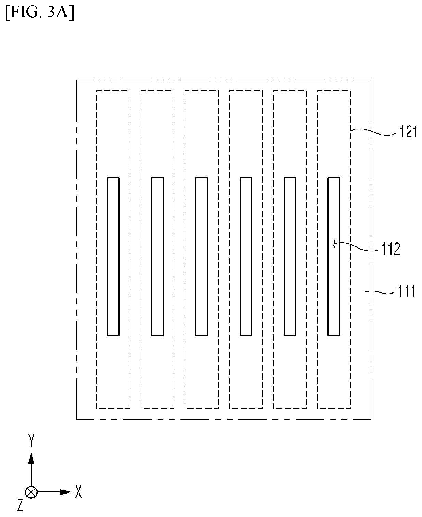

FIGS. 3A to 3C are bottom views of a part of the battery device 100. Hereinafter, the venting holes 112 of the base frame 111 according to embodiments will be described with reference to FIGS. 1 and 3A to 3C below.

Referring to FIG. 3A, each of the plurality of venting holes 112 of the base frame 111 may correspond to a corresponding battery cell 121 among the plurality of battery cells 121. Each of the venting holes 112 may be in the form of slit extending along the corresponding battery cell 121 in the second horizontal direction (e.g., the Y-axis direction).

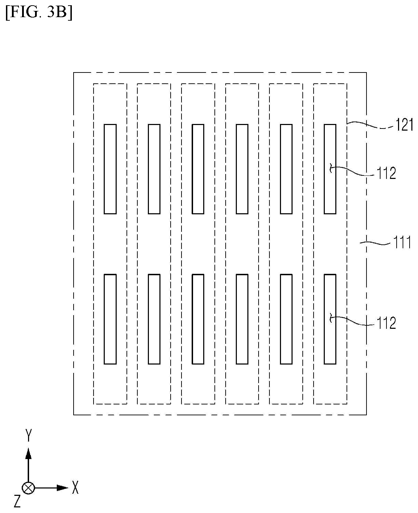

Referring to FIG. 3B, the plurality of venting holes 112 of the base frame 111 may be arranged in the first horizontal direction (e.g., the X-axis direction) and the second horizontal direction (e.g., the Y-axis direction). Each of the battery cells 121 may overlap two or more venting holes 112 in the vertical direction (e.g., the Z-axis direction).

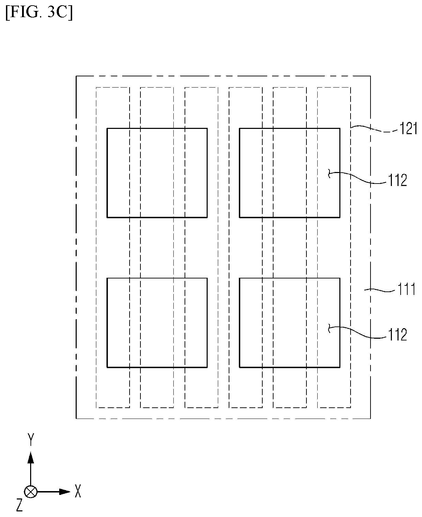

Referring to FIG. 3C, the plurality of venting holes 112 of the base frame 111 may extend in the first horizontal direction (e.g., the X-axis direction) to each overlap two or more battery cells 121 in the vertical direction (e.g., the Z-axis direction). FIG. 3C illustrates that each of the venting holes 112 overlap three battery cells 121 in the vertical direction (e.g., the Z-axis direction). However, embodiments are not limited to thereto and each of the venting holes 112 may overlap two or more battery cells 121 in the vertical direction (e.g., the Z-axis direction). For example, each of the venting holes 112 may extend in the first horizontal direction (e.g., the X-axis direction) to overlap all battery cells 121 of a single cell assembly 120 in the vertical direction (e.g., the Z-axis direction).

### (Third Embodiment)

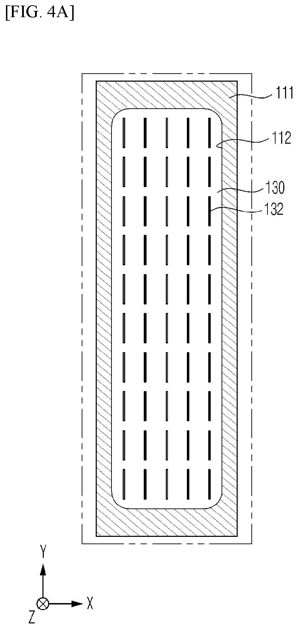

FIGS. 4A to 4G are bottom views of a part of the battery device 100. Hereinafter, the venting part 131 of the venting cover 130 according to embodiments will be described with reference to FIGS. 1 and 4A to 4G below.

Referring to FIG. 4A, the venting part 131 of the venting cover 130 may include a plurality of cutout patterns 132 arranged in the first horizontal direction (e.g., the X-axis direction) and the second horizontal direction (e.g., the Y-axis direction). The plurality of cutout patterns 132 may be arranged in a two-dimensional (2D) array of a plurality of rows and a plurality of columns. Each of the plurality of cutout patterns 132 may be in the form of a straight line extending in the second horizontal direction (e.g., the Y-axis direction). The plurality of cutout patterns 132 may have the same dimensions.

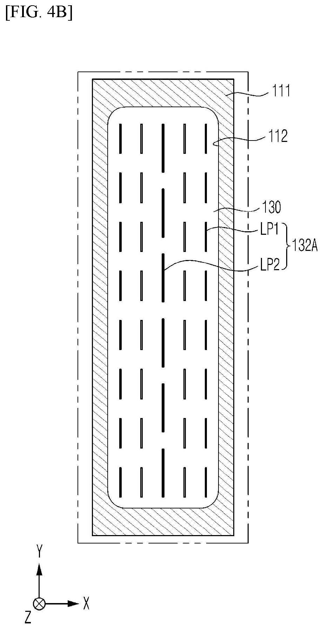

Referring to FIG. 4B, the venting part 131 of the venting cover 130 may include a plurality of cutout patterns 132A arranged in the first horizontal direction (e.g., the X-axis direction) and the second horizontal direction (e.g., the Y-axis direction). The plurality of cutout patterns 132A may include a plurality of first line patterns LP1 and a plurality of second line patterns LP2. Each of the plurality of first line patterns LP1 may be in the form of a straight line extending in the second horizontal direction (e.g., the Y-axis direction). The plurality of first line patterns LP1 may have the same dimensions. The plurality of first line patterns LP1 may be arranged in a 2D array of a plurality of rows and a plurality of columns. Each of the plurality of second line patterns LP2 may be in the form of a straight line extending in the second horizontal direction (e.g., the Y-axis direction). The plurality of second line patterns LP2 may have the same dimensions. A length of each of the second line patterns LP2 in the second horizontal direction (e.g., the Y-axis direction) may be greater than a length of each of the first line patterns LP1 in the second horizontal direction (e.g., the Y-axis direction). The plurality of second line patterns LP2 may be arranged in the second horizontal direction (e.g., the Y-axis direction) to form one column.

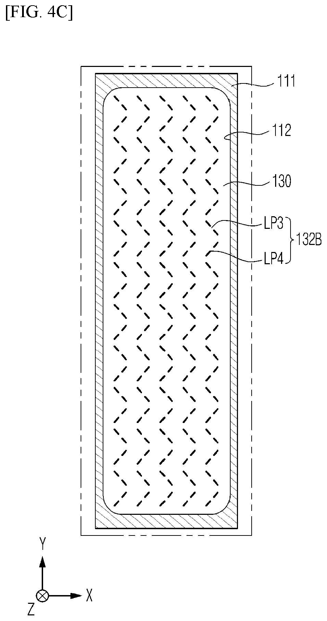

Referring to FIG. 4C, the venting part 131 of the venting cover 130 may include a plurality of cutout patterns 132B arranged in the first horizontal direction (e.g., the X-axis direction) and the second horizontal direction (e.g., the Y-axis direction). The cutout patterns 132B arranged in the second horizontal direction (e.g., the Y-axis direction) to form a column may be arranged in a zigzag pattern. The plurality of cutout patterns 132B may include a first line pattern LP3 extending in a first diagonal direction and a second line pattern LP4 extending in a second diagonal direction. The first diagonal direction may be inclined in each of the first horizontal direction (e.g., the X-axis direction) and the second horizontal direction (e.g., the Y-axis direction). The second diagonal direction may be inclined in each of the first horizontal direction (e.g., the X-axis direction) and the second horizontal direction (e.g., the Y-axis direction) and be different from the first diagonal direction. One or more first line patterns LP3 and one or more second line patterns LP4 may be alternately arranged in the second horizontal direction (e.g., the Y-axis direction).

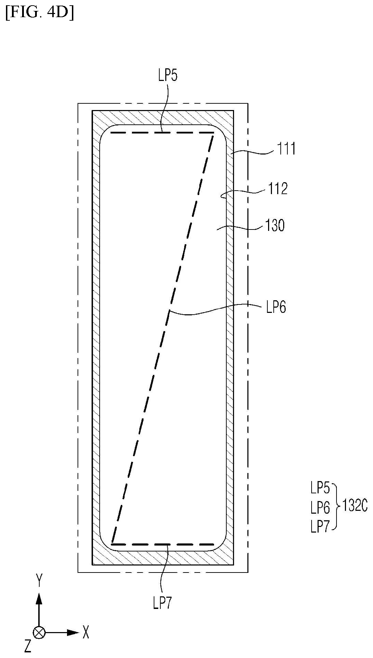

Referring to FIG. 4D, the venting part 131 of the venting cover 130 may include a plurality of cutout patterns 132C arranged in a Z-shape. For example, the plurality of cutout patterns 132C may include a plurality of first line patterns LP5 arranged along a first straight line parallel to the first horizontal direction (e.g., the X-axis direction), a plurality of second line patterns LP6 arranged along a second straight line parallel to a diagonal direction inclined with respect to each of the first horizontal direction (e.g., the X-axis direction) and the second horizontal direction (e.g., the Y-axis direction), and a plurality of third line patterns LP7 arranged along a third straight line parallel to the first horizontal direction (e.g., the X-axis direction). The third straight line may be spaced apart from the first straight line in the second horizontal direction (e.g., the Y-axis direction), and the second straight line may extend between one end of the first straight line and one end of the third straight line.

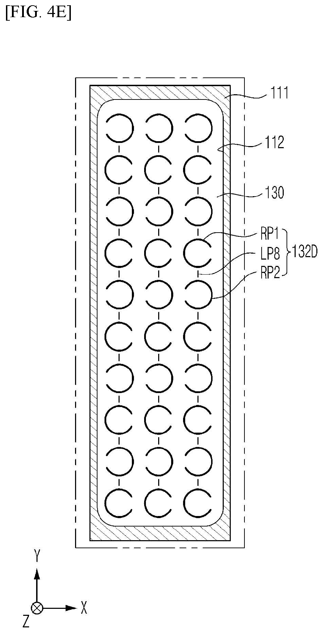

Referring to FIG. 4E, the venting part 131 of the venting cover 130 may include a plurality of cutout patterns 132D arranged in the first horizontal direction (e.g., the X-axis direction) and the second horizontal direction (e.g., the Y-axis direction). The plurality of cutout patterns 132D may include a first round pattern RP1 having a first arc shape, a second round pattern RP2 having a second arc shape, and a line pattern LP8 that is in the form of straight line extending in the second horizontal direction (e.g., the Y-axis direction). The cutout patterns 132D arranged in the second horizontal direction (e.g., the Y-axis direction) to form a column may include a first round pattern RP1, a second round pattern RP2, and a line pattern LP8. In a group of cutout patterns 132D forming one column, one first round pattern RP1 and one second round pattern RP2 may be alternately arranged in the second horizontal direction (e.g., the Y-axis direction), and the line pattern LP8 may be between the first round pattern RP1 and the second round pattern RP2.

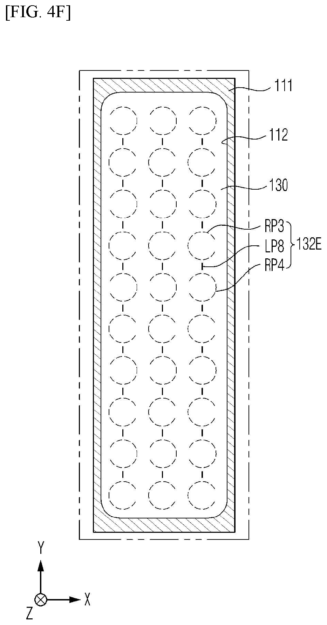

Referring to FIG. 4F, the venting part 131 of the venting cover 130 may include a plurality of cutout patterns 132E arranged in the first horizontal direction (e.g., the X-axis direction) and the second horizontal direction (e.g., the Y-axis direction). The plurality of cutout patterns 132E may include a first round pattern RP3 having a first arc shape, a second round pattern RP4 having a second arc shape, and a line pattern LP8 that is in the form of straight line extending in the second horizontal direction (e.g., the Y-axis direction). The first round pattern RP3 may include a plurality of patterns arranged along an arc. The second round pattern RP4 may include a plurality of patterns arranged along an arc.

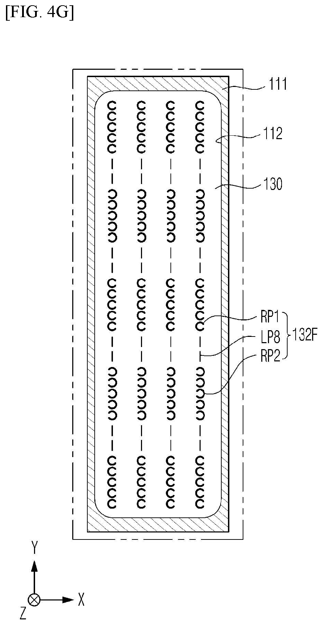

Referring to FIG. 4G, in a group of cutout patterns 132F forming a column, a plurality of first round patterns RP1 and a plurality of second round patterns RP2 may be alternately arranged in the second horizontal direction (e.g., the Y-axis direction), and the line pattern LP8 may be between the plurality of first round patterns RP1 and the plurality of second round patterns RP2.

### (Fourth Embodiment)

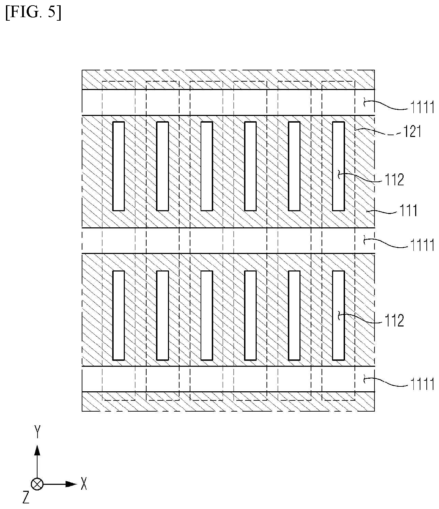

FIG. 5 is a cross-sectional view of a part of the battery device 100 taken along line V-V' of FIG. 1.

Referring to FIG. 5, the base frame 111 may include a cooling channel 1111 configured to allow a cooling fluid to flow therethrough. The cooling channels 1111 may overlap the plurality of battery cells 121 in the vertical direction (e.g., the Z-axis direction). For example, the cooling channel 1111 may extend in the first horizontal direction (e.g., the X-axis direction) to overlap the plurality of battery cells 121 in the vertical direction (e.g., the Z-axis direction). In the base frame 111, the cooling channel 1111 may be spaced apart from the venting hole 112. A cooling fluid from the outside may be supplied to an inlet of the cooling channel 1111 of the base frame 111, flow along the cooling channel 1111 of the base frame 111, and be discharged to the outside through an outlet of the cooling channel 1111 of the base frame 111. While the cooling fluid flows along the cooling channel 1111 of the base frame 111, the battery cells 121 may be cooled. The cooling fluid may include a coolant and/or a refrigerant.

### (Fifth Embodiment)

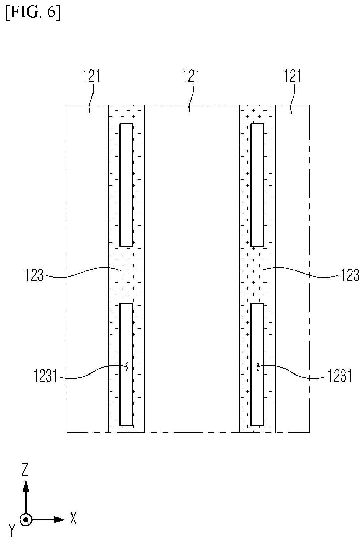

FIG. 6 is a cross-sectional view of a part of the battery device 100 according to embodiments.

Referring to FIG. 6, each inter-cell pad 123 may include a cooling channel 1231 configured to allow a cooling fluid to flow therethrough. The cooling channel 1231 may extend in the second horizontal direction (e.g., the Y-axis direction). A cooling fluid from the outside may be supplied to an inlet of the cooling channel 1231 of each inter-cell pad 123, flow along the cooling channel 1231 of each inter-cell pad 123, and be discharged to the outside through an outlet of the cooling channel 1231 of each inter-cell pad 123. While the cooling fluid flows along the cooling channel 1231 of each inter-cell pad 123, the battery cell 121 may be cooled. The cooling fluid may include a coolant and/or a refrigerant.

### (Sixth Embodiment)

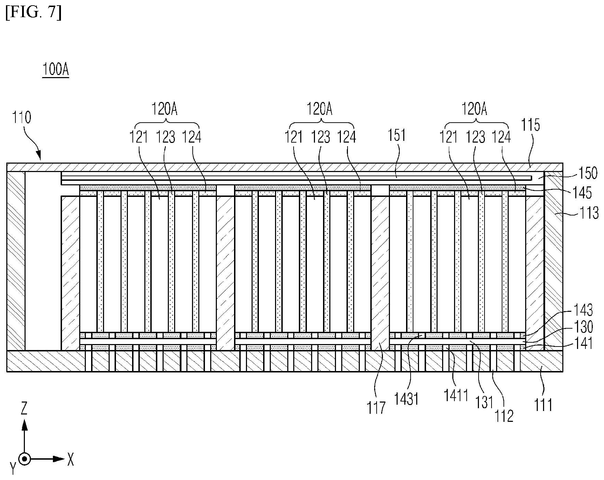

FIG. 7 is a cross-sectional view of a battery device 100A according to embodiments. Hereinafter, the battery device 100A of FIG. 7 will be described focusing on differences from the battery device 100 described above with reference to FIGS. 1 and 2.

Referring to FIG. 7, in the battery device 100A, a top pad 150 may include a cooling channel 151 configured to allow a cooling fluid to flow therethrough. The cooling channel 151 of the top pad 150 may extend in the first horizontal direction (e.g., the X-axis direction) and overlap a plurality of battery cells 121 in the vertical direction (e.g., the Z-axis direction). A cooling fluid from the outside may be supplied to an inlet of the cooling channel 151 of the top pad 150, flow along the cooling channel 151 of the top pad 150, and be discharged to the outside through an outlet of the cooling channel 151 of the top pad 150. While the cooling fluid flows along the cooling channel 151 of the top pad 150, the plurality of battery cells 121 may be cooled. The cooling fluid may include a coolant and/or a refrigerant.

A cell assembly 120A of the battery device 100A may further include a thermal conduction plate 124 coupled to a plurality of inter-cell pads 123. The thermal conduction plate 124 and the plurality of inter-cell pads 123 may include the same material. The thermal conduction plate 124 may cover upper surfaces of the plurality of battery cells 121. The plurality of inter-cell pads 123 may thermally couple the plurality of battery cells 121 to the top pad 150. The plurality of inter-cell pads 123 and the thermal conduction plate 124 may be configured to transfer heat generated in the plurality of battery cells 121 to the top pad 150. An adhesive layer 145 may be interposed between the thermal conduction plate 124 and the top pad 150 and may thermally and physically couple the thermal conduction plate 124 to the top pad 150.

### (Seventh Embodiment)

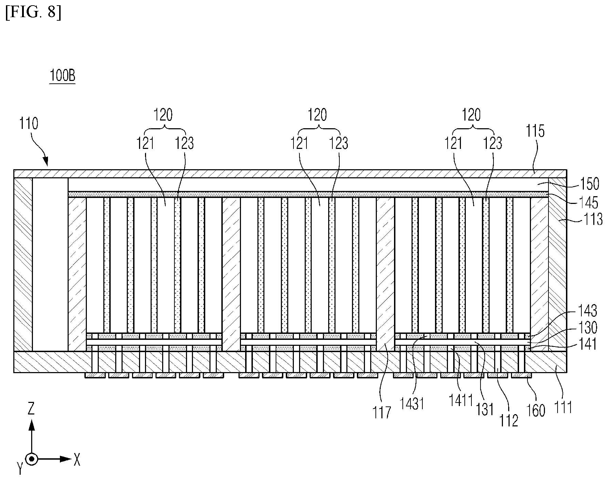

FIG. 8 is a cross-sectional view of a battery device 100B according to embodiments. Hereinafter, the battery device 100B of FIG. 8 will be described focusing on differences from the battery device 100 described above with reference to FIGS. 1 and 2.

Referring to FIG. 8, the battery device 100B may further include a plurality of venting devices 160 on a base frame 111. Each of the plurality of venting devices 160 may be mounted in a corresponding venting hole 112 among a plurality of venting holes 112 of the base frame 111. Each of the plurality of venting devices 160 may be mounted on the base frame 111 to cover the corresponding venting hole 112 among the plurality of venting holes 112 of the base frame 111. Each of the plurality of venting devices 160 may be configured to block or allow the flow of a gas through the corresponding venting hole 112 according to pressure of the corresponding venting hole 112. In embodiments, each of the venting devices 160 may include a membrane, a rupture disk, a relief valve, or a combination thereof.

Each of the venting devices 160 may be configured to rupture when the pressure of the corresponding venting hole 112 exceeds a certain level, similar to a membrane or a rupture disk. When internal pressure of the corresponding venting hole 112 is less than or equal to reference pressure, each of the venting devices 160 may close the corresponding venting hole 112 to block the flow of a gas through the corresponding venting hole 112. For example, when the internal pressure of the corresponding venting hole 112 exceeds the reference pressure, each of the venting devices 160 may rupture to allow the flow of a gas through the corresponding venting hole 112.

Each of the venting devices 160 may be a relief valve with an inner passage communicating with the corresponding venting hole 112. When the internal pressure of the corresponding venting hole 112 is less than or equal to the reference pressure, each of the venting devices 160 may close the inner passage to block the flow of a gas through the corresponding venting hole 112. For example, when the internal pressure of the corresponding venting hole 112 exceeds the reference pressure, each of the venting devices 160 may open the inner passage to allow the flow of a gas through the corresponding venting hole 112.

### (Eighth Embodiment)

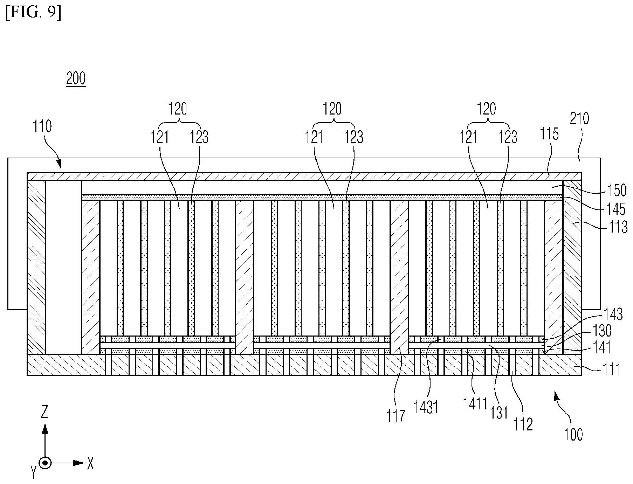

FIG. 9 is a cross-sectional view of an apparatus 200 according to embodiments.

Referring to FIG. 9, the apparatus 200 may include a battery device 100 and a frame 210 supporting the battery device 100. For example, the apparatus 200 may be an electric vehicle configured to drive with power supplied from the battery device 100. A housing 110 of the battery device 100 may be fastened to the frame 210 through a fastening member such as a bolt. In embodiments, when the apparatus 200 is an electric vehicle, a cabin room in which a passenger rides may be provided above the battery device 100. The battery device 100 has a downward venting structure configured to discharge a high-temperature gas and/or flames downward and thus may suppress the propagation of a high-temperature gas and/or flames into the cabin room. Accordingly, the safety of the electric vehicle including the battery device 100 may improve.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery device comprising:
a cell assembly with a plurality of battery cells;
a top pad on the cell assembly;
a housing including a base frame supporting the cell assembly and a top frame covering the top pad, wherein the base frame includes a plurality of venting holes; and
a venting cover provided between the cell assembly and the base frame, and configured to cover the plurality of venting holes of the base frame.

2. The battery device of claim 1, further comprising:
a first adhesive layer provided between the base frame and the venting cover, and configured to attach the venting cover to the base frame; and
a second adhesive layer provided between the cell assembly and the venting cover, and configured to attach the plurality of battery cells to the venting cover.

3. The battery device of claim 2, wherein the first adhesive layer includes a plurality of holes overlapping the plurality of venting holes of the base frame, and
the second adhesive layer includes a plurality of holes overlapping the plurality of venting holes of the base frame.

4. The battery device of claim 1, wherein the venting cover includes a plurality of cutout patterns in regions overlapping the plurality of venting holes of the base frame.

5. The battery device of claim 4, wherein the plurality of cutout patterns include a plurality of line patterns that are in the form of a straight line.

6. The battery device of claim 4, wherein the plurality of cutout patterns include a plurality of round patterns having an arc shape.

7. The battery device of claim 1, wherein the cell assembly further includes a plurality of inter-cell pads,
wherein each of the plurality of inter-cell pads is between two neighboring battery cells among the plurality of battery cells.

8. The battery device of claim 1, wherein the top pad includes a cooling channel configured to allow a cooling fluid to flow therethrough.

9. The battery device of claim 1, wherein the top pad is attached to the plurality of battery cells and includes a thermally conductive material.

10. The battery device of claim 9, further comprising an adhesive layer provided between the top pad and the cell assembly, and configured to attach the plurality of battery cells to the top pad.

11. The battery device of claim 9, wherein the cell assembly further includes a plurality of inter-cell pads,
wherein the plurality of inter-cell pads are between two neighboring battery cells among the plurality of battery cells, and
the plurality of inter-cell pads allow the plurality of battery cells to be thermally coupled to the top pad.

12. The battery device of claim 1, wherein the base frame further includes a cooling channel configured to allow a cooling fluid to flow therethrough,
wherein the cooling channel of the base frame overlaps the plurality of battery cells and is spaced apart from the plurality of venting holes of the base frame.

13. The battery device of claim 1, wherein the plurality of venting holes of the base frame overlaps two or more battery cells among the plurality of battery cells.

14. The battery device of claim 1, further comprising a plurality of venting devices on the base frame,
wherein each of the plurality of venting devices is configured to block or allow the flow of a gas through a corresponding venting hole among the plurality of venting holes according to inner pressure of the corresponding venting hole .

15. The battery device of claim 1, wherein the cell assembly further includes a plurality of inter-cell pads,
wherein each of the plurality of inter-cell pads is provided between two neighboring battery cells among the plurality of battery cells and includes a first cooling channel configured to allow a cooling fluid to flow therethrough,
the top pad is attached to the cell assembly via an adhesive layer, and includes a second cooling channel configured to allow the cooling fluid to flow therethrough, and
the venting cover includes a heat-resistant material.
